# EUROPEAN PATENT APPLICATION

(11) **EP 2 763 326 A2**
(43) Date of publication of application: **06.08.2014**
(21) Application number: 12837367.7
(22) Date of filing: 19.09.2012
(51) Int. Cl.: H04B 7/04, H04L 1/06, H04J 11/00

(54) **METHOD AND APPARATUS FOR TRANSMITTING UPLINK CONTROL SIGNAL IN WIRELESS COMMUNICATION SYSTEM**

(30) Priority: 26.09.2011 US 201161539467 P; 27.09.2011 US 201161539964 P; 02.11.2011 US 201161554504 P
(71) Applicant: LG Electronics Inc., Seoul 150-721 (KR)
(72) Inventor: LEE, Hyun Woo, Anyang-si Gyeonggi-do 431-749 (KR); SON, Hyuk Min, Anyang-si Gyeonggi-do 431-749 (KR); CHOI, Hye Young, Anyang-si Gyeonggi-do 431-749 (KR); HAN, Seung Hee, Anyang-si Gyeonggi-do 431-749 (KR); KIM, Jin Min, Anyang-si Gyeonggi-do 431-749 (KR)
(74) Representative: Urner, Peter
(86) International application number: PCT/KR2012/007487
(87) International publication number: WO 2013/048051

(57) **Abstract**

Provided are a method and apparatus for transmitting an uplink control signal in a wireless communication system. A terminal receives one antenna port in a good channel state or one indicator that indicates precoding, which is selected by a base station, from the base station; and transmits the uplink control signal through a physical uplink control channel (PUCCH) to the selected one antenna port or the selected one precoding.

## Description

### BACKGROUND OF THE INVENTION

### Field of the Invention

The present invention relates to wireless communications, and more particularly, to a method and apparatus for transmitting an uplink control signal in a wireless communication system.

### Related Art

The next-generation multimedia wireless communication systems which are recently being actively researched are required to process and transmit various pieces of information, such as video and wireless data as well as the initial voice-centered services. The 4^{th} generation wireless communication systems which are now being developed subsequently to the 3^{rd} generation wireless communication systems are aiming at supporting high-speed data service of downlink 1 Gbps (Gigabits per second) and uplink 500 Mbps (Megabits per second). The object of the wireless communication system is to establish reliable communications between a number of users irrespective of their positions and mobility. However, a wireless channel has abnormal characteristics, such as path loss, noise, a fading phenomenon due to multipath, inter-symbol interference (ISI), and the Doppler Effect resulting from the mobility of a user equipment. A variety of techniques are being developed in order to overcome the abnormal characteristics of the wireless channel and to increase the reliability of wireless communication.

Uplink control information (UCI) may be transmitted through a physical uplink control channel (PUCCH). The UCI may contain various kinds of information such as a scheduling request (SR), an acknowledgment/non-acknowledgement (ACK/NACK) signal for a hybrid automatic repeat request (HARQ), a channel quality indicator (CQI), a precoding matrix indicator (PMI), and a rank indicator (RI), etc. The PUCCH may carry various kinds of control information depending on the format. The transmission of the UCI through the PUCCH is described in section 10 of 3^{rd} generation partnership project (3GPP) TS 36.213 V8.8.0 (2009-09).

When the uplink control signal is transmitted through the PUCCH, various transmit diversity schemes may be applied. For example, a spatial orthogonal resource transmit diversity (SORTD) may be applied for the PUCCH. Generally, when the transmit diversity scheme is applied, the required number of PUCCH resources is larger than the number of PUCCH resources needed in a single antenna port. For example, when the SORTD is applied, the required number of PUCCH resources is the double of the required PUCCH resources when the uplink control signal is transmitted through a single antenna port.

Hence, there is a need of a method of applying a transmit diversity scheme to the PUCCH without an increase of PUCCH resources.

### SUMMARY OF THE INVENTION

The present invention provides a method and apparatus for transmitting an uplink control signal in a wireless communication system. The present invention provides a method of applying an antenna port selection scheme or a precoding selection scheme for the PUCCH. Further, the present invention provides a method of signaling an indicator for applying an antenna port selection scheme or a precoding selection scheme for the PUCCH.

In an aspect, a method of transmitting, by a user equipment (UE), an uplink control signal in a wireless communication is provided. The method includes receiving an indicator indicating one antenna port which is selected by a base station and has a good channel state, from the base station, and transmitting the uplink control signal on the selected one antenna port through a physical uplink control channel (PUCCH).

In another aspect, a method of selecting, by a base station, an antenna port in a wireless communication system is provided. The method includes receiving, from a user equipment (UE), an uplink control signal on two antenna ports through a physical uplink control channel (PUCCH), selecting one antenna port with a better channel state among the two antenna ports based on the received uplink control signal, and transmitting an indicator indicating the selected antenna port to the UE.

In another aspect, a method of transmitting, by a user equipment (UE), an uplink control signal in a wireless communication system is provided. The method includes receiving an indicator indicating one precoding which is selected by a base station, from the base station, and transmitting the uplink control signal on the selected precoding through a physical uplink control channel (PUCCH).

A transmit diversity for the PUCCH can be supported.

### BRIEF DESCRIPTION OF THE DRAWINGS

FIG. 1 shows a wireless communication system.
FIG. 2 shows the structure of a radio frame in 3GPP LTE.
FIG. 3 shows an example of a resource grid of a single downlink slot.
FIG. 4 shows structure of a downlink subframe.
FIG. 5 shows structure of an uplink subframe.
FIG. 6 shows a PUCCH format 1a/1b in a normal CP structure.
FIG. 7 shows a PUCCH format 1a/1b in an extended CP structure.
FIG. 8 shows a PUCCH format 2/2a/2b.
FIG. 9 shows an example of a case where an SORTD is applied for a PUCCH format 1b with channel selection.
FIG. 10 shows an embodiment of an antenna port selection scheme according to the present invention.
FIG. 11 shows another embodiment of an antenna port selection scheme according to the present invention.
FIG. 12 shows an embodiment of a method for selecting an antenna port according to the present invention.
FIG. 13 shows an embodiment of a method for transmitting an uplink control signal according the present invention.
FIG. 14 shows an embodiment of a method for selecting precoding according to the present invention.
FIG. 15 shows another embodiment of a method for transmitting an uplink control signal according the present invention.
FIG. 16 is a block diagram showing wireless communication system to implement an embodiment of the present invention.

### DESCRIPTION OF EXEMPLARY EMBODIMENTS

The following technique may be used for various wireless communication systems such as code division multiple access (CDMA), a frequency division multiple access (FDMA), time division multiple access (TDMA), orthogonal frequency division multiple access (OFDMA), single carrier-frequency division multiple access (SC-FDMA), and the like. The CDMA may be implemented as a radio technology such as universal terrestrial radio access (UTRA) or CDMA2000. The TDMA may be implemented as a radio technology such as a global system for mobile communications (GSM)/general packet radio service (GPRS)/enhanced data rates for GSM evolution (EDGE). The OFDMA may be implemented by a radio technology such as institute of electrical and electronics engineers (IEEE) 802.11 (Wi-Fi), IEEE 802.16 (WiMAX), IEEE 802.20, E-UTRA (Evolved UTRA), and the like. IEEE 802.16m, an evolution of IEEE 802.16e, provides backward compatibility with a system based on IEEE 802.16e. The UTRA is part of a universal mobile telecommunications system (UMTS). 3^{rd} generation partnership project (3GPP) long term evolution (LTE) is part of an evolved UMTS (E-UMTS) using the E-UTRA, which employs the OFDMA in downlink and the SC-FDMA in uplink. LTE-advanced (LTE-A) is an evolution of 3GPP LTE.

Hereinafter, for clarification, LTE-A will be largely described, but the technical concept of the present invention is not meant to be limited thereto.

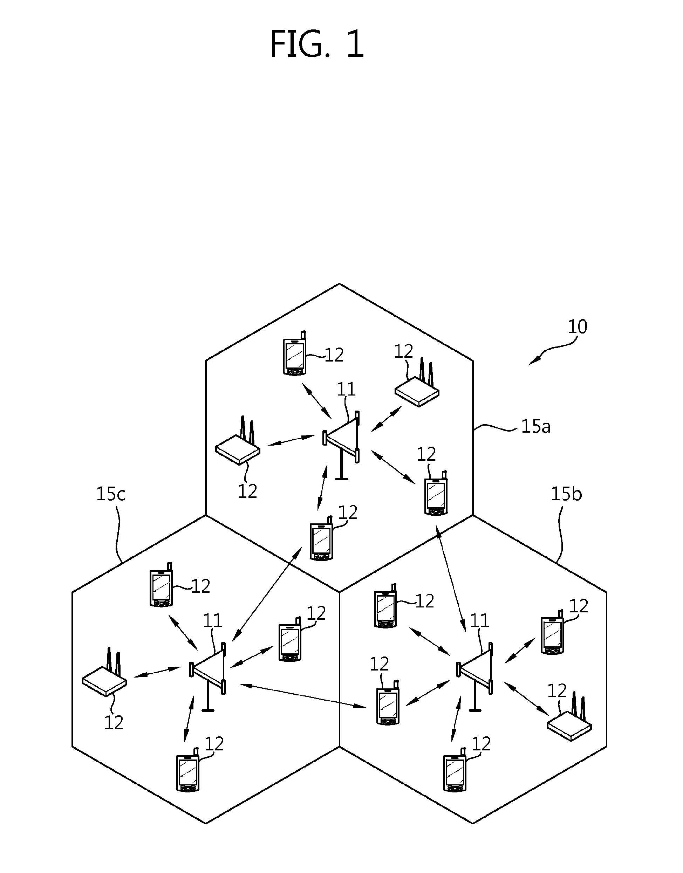

FIG. 1 shows a wireless communication system.

The wireless communication system 10 includes at least one base station (BS) 11. Respective BSs 11 provide a communication service to particular geographical areas 15a, 15b, and 15c (which are generally called cells). Each cell may be divided into a plurality of areas (which are called sectors). A user equipment (UE) 12 may be fixed or mobile and may be referred to by other names such as mobile station (MS), mobile terminal (MT), user terminal (UT), subscriber station (SS), wireless device, personal digital assistant (PDA), wireless modem, handheld device. The BS 11 generally refers to a fixed station that communicates with the UE 12 and may be called by other names such as evolved-NodeB (eNB), base transceiver system (BTS), access point (AP), etc.

In general, a UE belongs to one cell, and the cell to which a UE belongs is called a serving cell. A BS providing a communication service to the serving cell is called a serving BS. The wireless communication system is a cellular system, so a different cell adjacent to the serving cell exists. The different cell adjacent to the serving cell is called a neighbor cell. A BS providing a communication service to the neighbor cell is called a neighbor BS. The serving cell and the neighbor cell are relatively determined based on a UE.

This technique can be used for downlink or uplink. In general, downlink refers to communication from the BS 11 to the UE 12, and uplink refers to communication from the UE 12 to the BS 11. In downlink, a transmitter may be part of the BS 11 and a receiver may be part of the UE 12. In uplink, a transmitter may be part of the UE 12 and a receiver may be part of the BS 11.

The wireless communication system may be any one of a multiple-input multiple-output (MIMO) system, a multiple-input single-output (MISO) system, a single-input single-output (SISO) system, and a single-input multiple-output (SIMO) system. The MIMO system uses a plurality of transmission antennas and a plurality of reception antennas. The MISO system uses a plurality of transmission antennas and a single reception antenna. The SISO system uses a single transmission antenna and a single reception antenna. The SIMO system uses a single transmission antenna and a plurality of reception antennas. Hereinafter, a transmission antenna refers to a physical or logical antenna used for transmitting a signal or a stream, and a reception antenna refers to a physical or logical antenna used for receiving a signal or a stream.

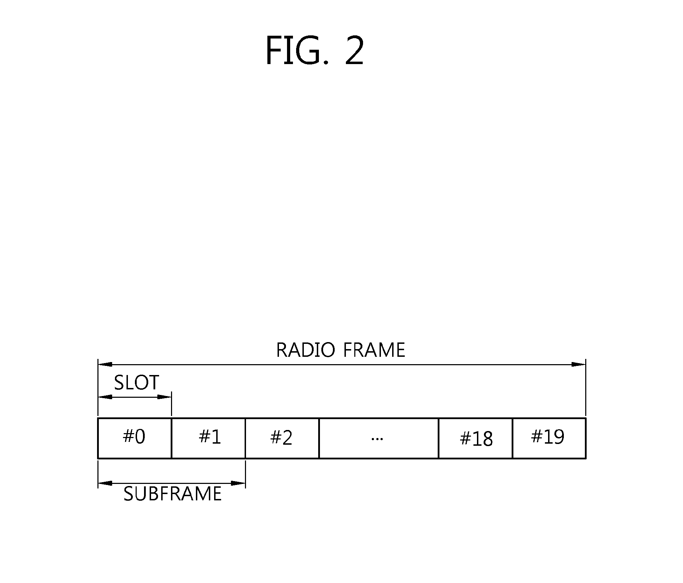

FIG. 2 shows the structure of a radio frame in 3GPP LTE.

It may be referred to Paragraph 5 of "Technical Specification Group Radio Access Network; Evolved Universal Terrestrial Radio Access (E-UTRA); Physical channels and modulation (Release 8)" to 3GPP (3rd generation partnership project) TS 36.211 V8.2.0 (2008-03). Referring to FIG. 2, the radio frame includes 10 subframes, and one subframe includes two slots. The slots in the radio frame are numbered by #0 to #19. A transmission time interval (TTI) is a basic scheduling unit for data transmission. In 3GPP LTE, one TTI may be equal to a time taken for transmitting one subframe. A radio frame may have a length of 10 ms, a subframe may have a length of 1 ms, and a slot may have a length of 0.5 ms.

One slot includes a plurality of orthogonal frequency division multiplexing (OFDM) symbols in a time domain and a plurality of subcarriers in a frequency domain. Since 3GPP LTE uses OFDMA in downlink, the OFDM symbols are used to express a symbol period. The OFDM symbols may be called by other names depending on a multiple-access scheme. For example, when SC-FDMA is in use as an uplink multi-access scheme, the OFDM symbols may be called SC-FDMA symbols. A resource block (RB), a resource allocation unit, includes a plurality of continuous subcarriers in a slot. The structure of the radio frame is merely an example. Namely, the number of subframes included in a radio frame, the number of slots included in a subframe, or the number of OFDM symbols included in a slot may vary.

3GPP LTE defines that one slot includes seven OFDM symbols in a normal cyclic prefix (CP) and one slot includes six OFDM symbols in an extended CP.

The wireless communication system may be divided into a frequency division duplex (FDD) scheme and a time division duplex (TDD) scheme. According to the FDD scheme, an uplink transmission and a downlink transmission are made at different frequency bands. According to the TDD scheme, an uplink transmission and a downlink transmission are made during different periods of time at the same frequency band. A channel response of the TDD scheme is substantially reciprocal. This means that a downlink channel response and an uplink channel response are almost the same in a given frequency band. Thus, the TDD-based wireless communication system is advantageous in that the downlink channel response can be obtained from the uplink channel response. In the TDD scheme, the entire frequency band is time-divided for uplink and downlink transmissions, so a downlink transmission by the BS and an uplink transmission by the UE can be simultaneously performed. In a TDD system in which an uplink transmission and a downlink transmission are discriminated in units of subframes, the uplink transmission and the downlink transmission are performed in different subframes.

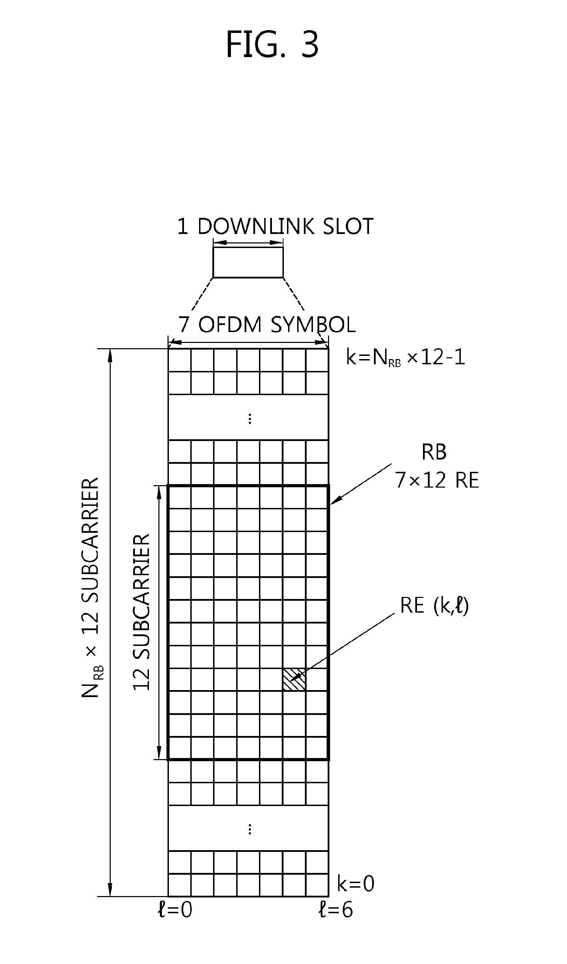

FIG. 3 shows an example of a resource grid of a single downlink slot.

A downlink slot includes a plurality of OFDM symbols in the time domain and N_{RB} number of resource blocks (RBs) in the frequency domain. The N_{RB} number of resource blocks included in the downlink slot is dependent upon a downlink transmission bandwidth set in a cell. For example, in an LTE system, N_{RB} may be any one of 60 to 110. One resource block includes a plurality of subcarriers in the frequency domain. An uplink slot may have the same structure as that of the downlink slot.

Each element on the resource grid is called a resource element. The resource elements on the resource grid can be discriminated by a pair of indexes (k,l) in the slot. Here, k (k=0,...,N_{RB}×12-1) is a subcarrier index in the frequency domain, and 1 is an OFDM symbol index in the time domain.

Here, it is illustrated that one resource block includes 7x12 resource elements made up of seven OFDM symbols in the time domain and twelve subcarriers in the frequency domain, but the number of OFDM symbols and the number of subcarriers in the resource block are not limited thereto. The number of OFDM symbols and the number of subcarriers may vary depending on the length of a cyclic prefix (CP), frequency spacing, and the like. For example, in case of a normal CP, the number of OFDM symbols is 7, and in case of an extended CP, the number of OFDM symbols is 6. One of 128, 256, 512, 1024, 1536, and 2048 may be selectively used as the number of subcarriers in one OFDM symbol.

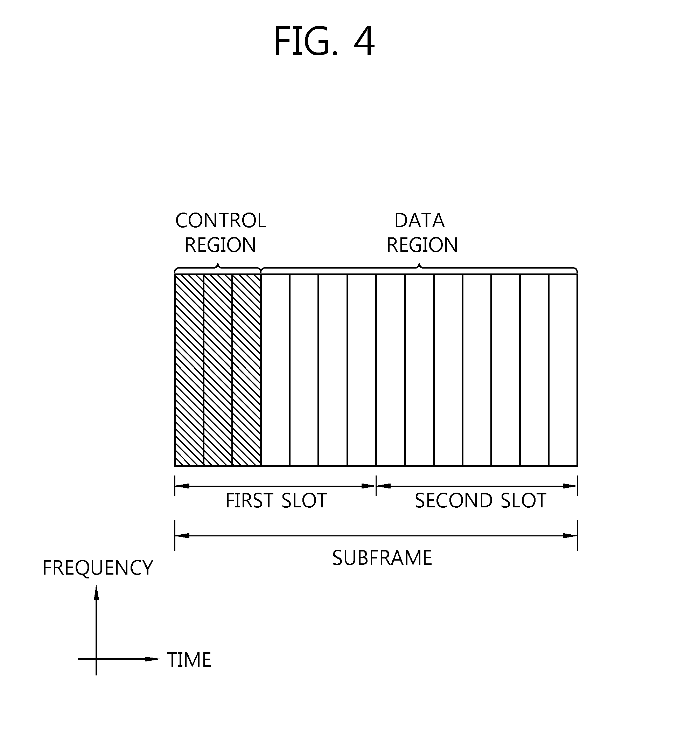

FIG. 4 shows structure of a downlink subframe.

A downlink subframe includes two slots in the time domain, and each of the slots includes seven OFDM symbols in the normal CP. First three OFDM symbols (maximum four OFDM symbols with respect to a 1.4 MHz bandwidth) of a first slot in the subframe corresponds to a control region to which control channels are allocated, and the other remaining OFDM symbols correspond to a data region to which a physical downlink shared channel (PDSCH) is allocated.

The PDCCH may carry a transmission format and a resource allocation of a downlink shared channel (DL-SCH), resource allocation information of an uplink shared channel (UL-SCH), paging information on a PCH, system information on a DL-SCH, a resource allocation of an higher layer control message such as a random access response transmitted via a PDSCH, a set of transmission power control commands with respect to individual UEs in a certain UE group, an activation of a voice over internet protocol (VoIP), and the like. A plurality of PDCCHs may be transmitted in the control region, and a UE can monitor a plurality of PDCCHs. The PDCCHs are transmitted on one or an aggregation of a plurality of consecutive control channel elements (CCE). The CCE is a logical allocation unit used to provide a coding rate according to the state of a wireless channel. The CCE corresponds to 9 resource element groups (REG) including respectively 4 resource elements. 4 quadrature phase shift keying (QPSK) symbols are mapped to each REG. Resource elements occupied by reference signals (RS) are not included in the REG, and the total number of REGs within a given OFDM symbol may be determined according to whether a cell-specific RS (CRS) exists. The format of the PDCCH and the number of bits of the possible PDCCH are determined according to the correlation between the number CCEs and the coding rate provided by the CCEs. The number of CCEs used for transmission of a specific PDCCH may be determined by the base station according to the channel situation. For example, the PDCCH for the UE having a superior channel state may use only one CCE. The PDCCH for the UE having an inferior channel state may need 8 CCEs in order to obtain sufficient robustness. Furthermore, the transmission power of the PDCCH may be adjusted according to the channel state.

The BS determines a PDCCH format according to a DCI to be transmitted to the UE, and attaches a cyclic redundancy check (CRC) to the DCI. A unique radio network temporary identifier (RNTI) is scrambled or masked on the CRC according to the owner or the purpose of the PDCCH. In case of a PDCCH for a particular UE, a unique identifier, e.g., a cell-RNTI (C-RNTI), of the UE, may be scrambled on the CRC. Or, in case of a PDCCH for a paging message, a paging indication identifier, e.g., a paging-RNTI (P-RNTI), may be scrambled on the CRC. In case of a PDCCH for a system information block (SIB), a system information identifier, e.g., a system information-RNTI (SI-RNTI), may be scrambled on the CRC. In order to indicate a random access response, i.e., a response to a transmission of a random access preamble of the UE, a random access-RNTI (RA-RNTI) may be scrambled on the CRC.

A restrictive set at the CCE position where the PDCCH may be located may be defined for each UE. The set of the CCE position where the PDCCH of each UE itself may be found is called a search space. The size of the search space is different according to the format of the PDCCH. The search space may be divided into a common search space (CSS) and a UE-specific search space (USS). The CSS is an area where the PDCCH which carries common control information is searched, and is a search area which is commonly configured for all UEs. The CSS is compose of 16 CCEs of CCE indexes 0 to 15, and may support the PDCCH of aggregation levels 4 and 8. However, the DCI format 0/1A which carries UE-specific control information may be transmitted through the CSS. The USS is a dedicated search space for a specific UE. The USS may support the PDCCH of aggregation levels 1, 2, 4, and 8. For one UE, the CSS may overlap with the USS.

The UE blind-decodes a DCI format which is transmitted from the base station. The blind decoding is a scheme of determining whether the PDCCH is the UE's own control channel by checking a CRC error by de-scrambling a desired identifier to the CRC of the received PDCCH. The UE does not know the position where the UE's PDCCH is transmitted within the control region, and the CCE aggregation level or DCI format which is used for the transmission. In order to reduce a calculation burden of the UE's blind decoding, the UE does not need to simultaneously search for all defined DCI formats. Generally, the UE may always search for the DCI format 0/1A in the USS. The DCI format 0 is used for the scheduling of the physical uplink shared channel (PUSCH). The DCI format 1A is used for the scheduling of the PDSCH and for the random access procedure which is initialized by the order of the PDCCH. The DCI format 0/1A may have the same size, and may be distinguished by a flag within the DCI format. Furthermore, the UE may be requested to further receive the DCI format 1/1B/2, etc., in the USS according to the PDSCH transmission mode which is configured by the base station. The UE may search form the DCI format 1A/1C in the CSS. Furthermore, the UE may be configured to search for the DCI format 3/3A, etc., in the CSS. The DCI format 3/3A has the same size as that of the DCI format 0/1A and may be distinguished by having a CRC which has been scrambled by the different identifiers. The UE may perform blind decoding up to 44 times within the subframe according to the transmission mode and the DCI format. When carrier aggregation (CA) is configured, blind decoding may be performed up to 44 times in a primary cell (PCell) or a primary component carrier (PCC), and additional blind decoding may be performed in at least one secondary cell (SCell) or at least one secondary component carrier (SCC).

The control region of each serving cell is composed of a set of CCEs whose indexes are 0 to N_{CCE,k}-1, and N_{CCE,k} is the total number of CCEs within the control region of subframe k. The UE may monitor the PDCCH candidate set as configured by the higher layer on one or more activated serving cells. At this time, the monitoring is an attempt of respectively decoding the PDCCH within the PDCCH candidate set according to all monitored DCI formats. Search space Sₖ^{(L)} in aggregation levels 1, 2, 4, or 8 may be defined by the PDCCH candidate set.

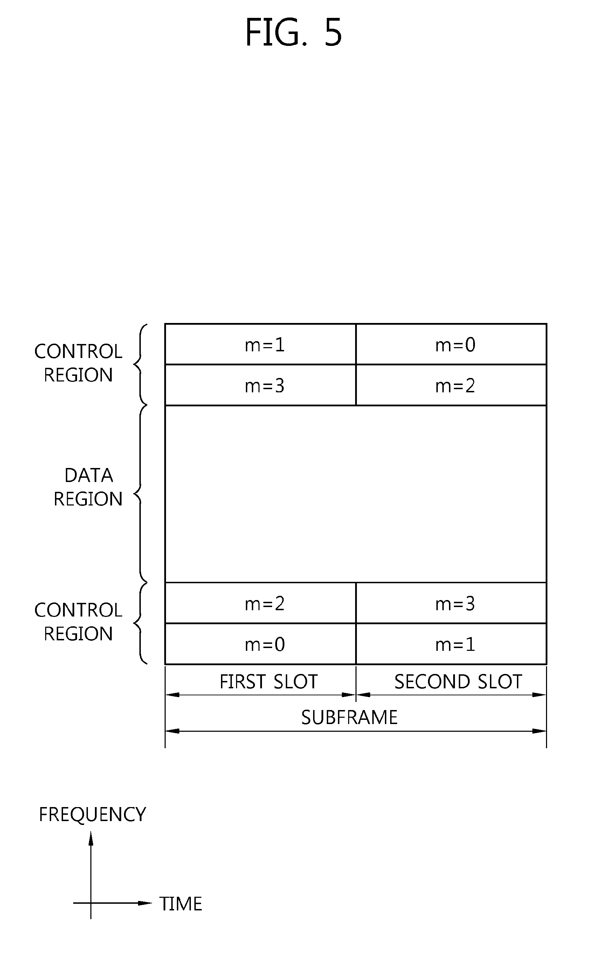

FIG. 5 shows structure of an uplink subframe.

An uplink subframe may be divided into a control region and a data region in the frequency domain. A physical uplink control channel (PUCCH) for transmitting uplink control information is allocated to the control region. A physical uplink shared channel (PUCCH) for transmitting data is allocated to the data region. When indicated by a higher layer, the UE may support a simultaneous transmission of the PUSCH and the PUCCH.

The PUCCH with respect to a UE is allocated by a pair of resource blocks in a subframe. The resource blocks belonging to the pair of resource blocks (RBs) occupy different subcarriers in first and second slots, respectively. The frequency occupied by the RBs belonging to the pair of RBs is changed based on a slot boundary. This is said that the pair of RBs allocated to the PUCCH is frequency-hopped at the slot boundary. The UE can obtain a frequency diversity gain by transmitting uplink control information through different subcarriers according to time. In FIG. 5, m is a position index indicating the logical frequency domain positions of the pair of RBs allocated to the PUCCH in the subframe.

Uplink control information transmitted on the PUCCH may include a hybrid automatic repeat request (HARQ) acknowledgement (ACK), a channel quality indicator (CQI) indicating the state of a downlink channel, a scheduling request (SR), and the like. Table 1 shows supported PUCCH formats.

**[Table 1]**

| PUCCH format | Modulation scheme | Number of bits per subframe (M_{Bit}) |
|---|---|---|
| 1 | N/A | N/A |
| 1a | BPSK | 1 |
| 1b | QPSK | 2 |
| 2 | QPSK | 20 |
| 2a | QPSK+BPSK | 21 |
| 2b | QPSK+QPSK | 22 |
| 3 | QPSK | 48 |

A PUCCH format 1 carries a positive SR. A PUCCH format 1a carries 1-bit HARQ-ACK with a positive SR. A PUCCH format 1b carries 2-bit HARQ-ACK with a positive SR. A PUCCH format 2 carries a CSI report when not multiplexed HARQ-ACK, or a CSI report multiplexed with HARQ-ACK for extended CP. A PUCCH format 2a carries a CSI report multiplexed with 1-bit HARQ-ACK for normal CP. A PUCCH format 2b carries a CSI report multiplexed with 2-bit HARQ-ACK for normal CP. A PUCCH format 3 carries up to 10-bit HARQ-ACK for FDD and for up to 20-bit HARQ-ACK for TDD. Or, A PUCCH format 3 carries up to 10-bit HARQ-ACK and 1-bit positive/negative SR for FDD and up to 20-bit HARQ-ACK and 1-bit positive/negative SR for TDD.

Resource nᵣ for PUCCH format 1/1a/1b may be determined by a combination of cyclic shift n_{cs} in a symbol level, orthogonal code n_{oc} in a slot level, and resource block n_{rb} of a frequency domain. That is, nᵣ = (n_{cs}, n_{oc}, n_{rb}). An ACK/NACK signal may be transmitted on different resources including different cyclic shifts and different Walsh/discrete Fourier transform (DFT) orthogonal codes for respective UEs using computer-generated-constant amplitude zero auto correlation (CG-CAZAC) sequence as the basic sequence. The cyclic shift is a frequency domain code, and the Walsh/DFT orthogonal code is a time domain spreading code. When the number of usable cyclic shifts is 6 and the number of Walsh/DFT codes is 3, a total of 18 UEs having a single antenna port may be multiplexed within one PRB.

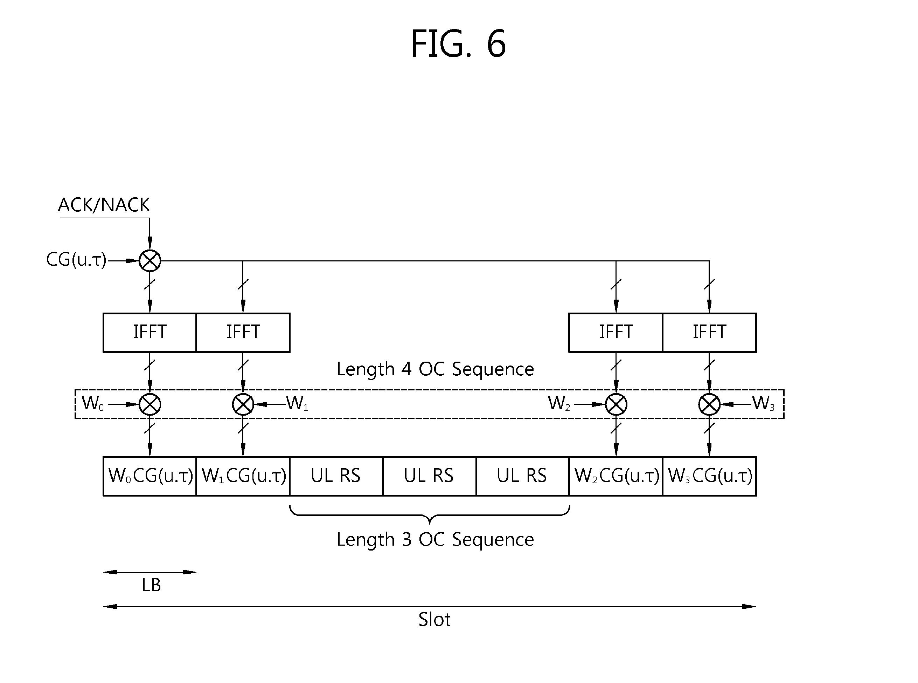

FIG. 6 shows a PUCCH format 1a/1b in a normal CP structure. An uplink reference signal is transmitted in third to fifth SC-FDMA symbols. In FIG. 6, w₀, w₁, w₂ and w₃ may be modulated in the time domain after the inverse fast Fourier transform (IFFT) modulation or may be modulated in the frequency domain before the IFFT modulation.

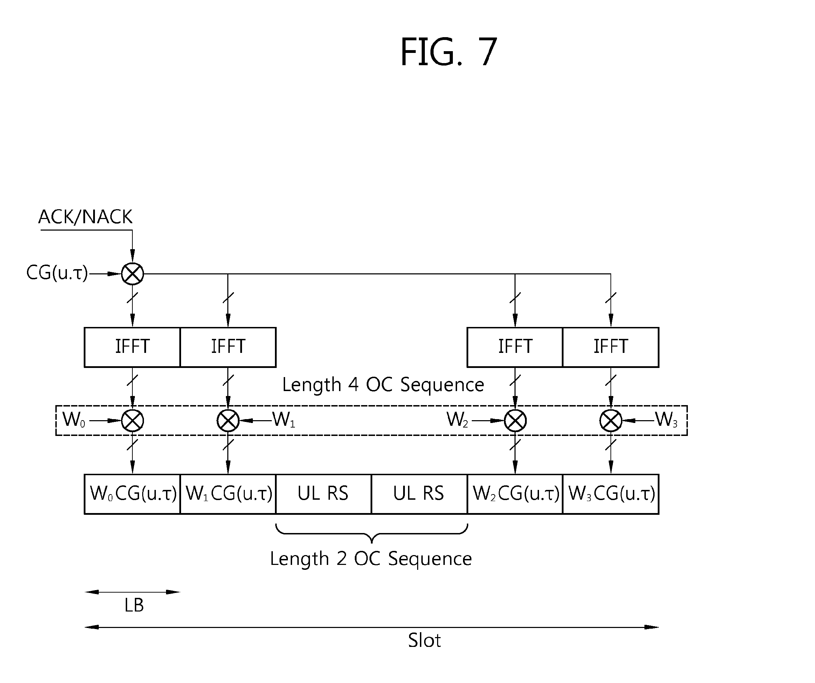

FIG. 7 shows a PUCCH format 1a/1b in an extended CP structure. The uplink reference signal is transmitted in third and fourth SC-FDMA symbols. In FIG. 7, w₀, w₁, w₂ and w₃ may be modulated in the time domain after the IFFT modulation or may be modulated in the frequency domain before the IFFT modulation.

Meanwhile, a cyclic shift hopping may be performed based on a symbol for inter-cell interference (ICI) randomization. Furthermore, a CS/orthogonal covering (OC) remapping may be performed between the ACK/NACK channel and resources for ICI randomization.

The PUCCH format 2/2a/2b may carry control information such as CQI, a precoding matrix indicator (PMI), a rank indicator (RI), and CQI + ACK/NACK, etc. The resource nᵣ for PUCCH format 2/2a/2b may be determined by cyclic shift n_{cs} in the symbol level and the resource block n_{rb} of the frequency domain. That is, nᵣ=(n_{cs}, n_{rb}). Reed-Muller (RM) channel coding scheme may be applied to the PUCCH format 2/2a/2b.

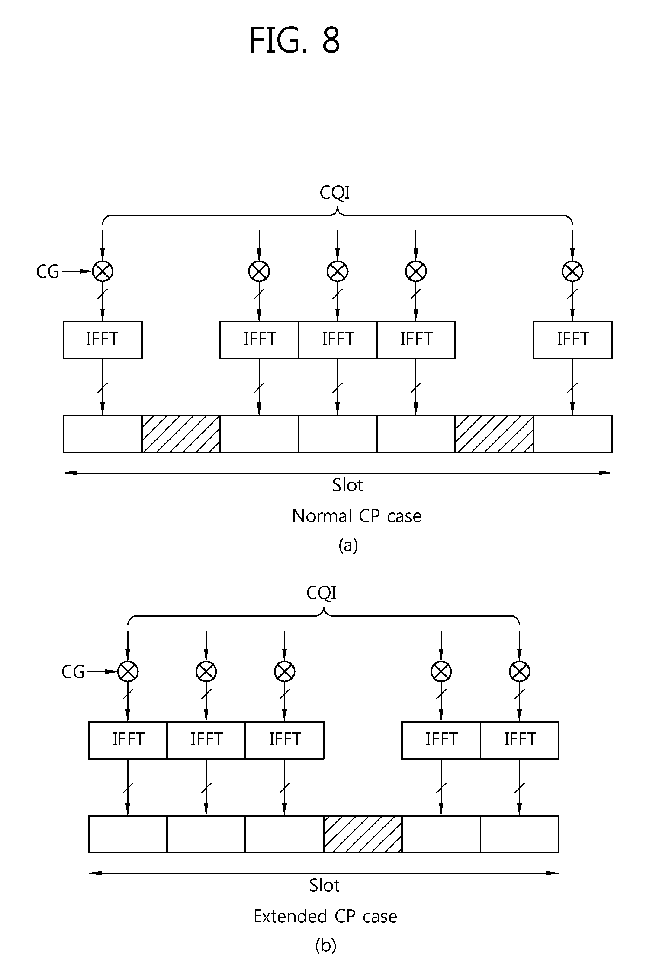

FIG. 8 shows a PUCCH format 2/2a/2b. FIG. 8-(a) shows a normal CP structure, and FIG. 8-(b) shows an extended CP structure. In FIG. 8-(a), a reference signal is transmitted in second and sixth SC-FDMA symbols of the slot, and in FIG. 8-(b), a reference signal is transmitted in fourth SC-FDMA symbol of the slot.

In the normal CP structure, one sub frame includes 10 QPSK data symbols except the SC-FDMA for transmission of the reference signal. That is, each QPSK symbol may be spread by the cyclic shift in the SC-FDMA symbol level using the 20-bit encoded CQI.

Further, the SC-FDMA symbol level cyclic shift hopping may be applied for ICI randomization. The reference signal may be multiplexed by the code division multiplexing (CDM) scheme using the cyclic shift. For example, when the number of usable cyclic shift values is 12, 12 UEs may be multiplexed within one PRB. That is, a plurality of UEs within the PUCCH format 1/1a/1b and PUCCH format 2/2a/2b may be multiplexed by the cyclic shift/orthogonal code/resource block and the cyclic shift/resource block, respectively.

PUCCH format 3 may substitute PUCCH format 1/1a/1b or 2/2a/2b of LTE rel-8 for transmission of more payloads in the carrier aggregation (CA), etc. As the payload increases when CQI/PMI/RI as well as ACK/NACK feedback information are transmitted for each component carrier, and thus CQI/PMI/RI may be transmitted using PUCCH format 3.

In PUCCH format 3, information bits are scrambled by a UE-specific scrambling sequence, thereby becoming scrambled bits. The scrambled bits are QPSK-modulated, thereby becoming complex-valued modulation symbols. The complex-valued modulation symbols are block-wise spread by the orthogonal sequence. The cyclic shift and precoding are performed for the complex-valued modulation symbols which are block-wise spread. The resource, which is used in transmission of PUCCH format 3, may be indicated by one resource index.

The PUSCH is mapped to an uplink shared channel (UL-SCH), a transport channel. Uplink data transmitted on the PUSCH may be a transport block, a data block for the UL-SCH transmitted during the TTI. The transport block may be user information. Or, the uplink data may be multiplexed data. The multiplexed data may be data obtained by multiplexing the transport block for the UL-SCH and control information. For example, control information multiplexed to data may include a CQI, a precoding matrix indicator (PMI), an HARQ, a rank indicator (RI), or the like. Or the uplink data may include only control information.

Various transmit diversity schemes may be applied for the transmit diversity of the PUCCH. In particular, a spatial orthogonal resource transmit diversity may be applied as the transmit diversity scheme of the PUCCH format 1/1a/1b.

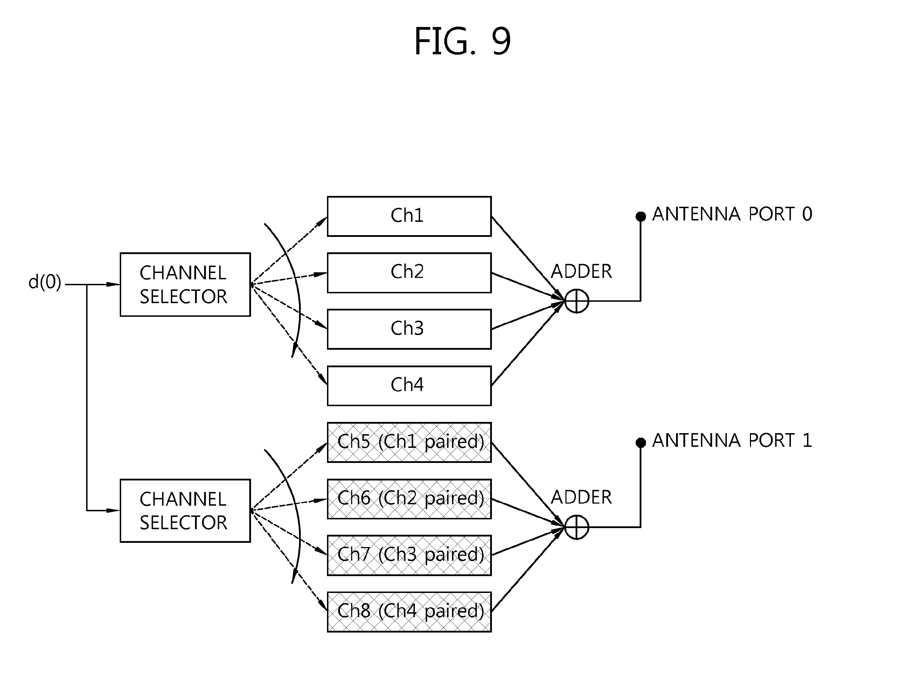

FIG. 9 shows an example of a case where an SORTD is applied for a PUCCH format 1b with channel selection.

FIG. 9 shows a transmitter which transmits a 4-bit ACK/NACK signal using 8 orthogonal resources. The modulation symbol d(0) is transmitted through antenna port 0 on one orthogonal channel which is selected by the channel selector among the first channel to the fourth channel. Furthermore, the modulation symbol d(0) is transmitted through antenna port 1 on the orthogonal channel selected by the channel selector among the fifth channel to eighth channel. The fifth to eighth channels are respectively paired with the first to fourth channels. That is, if 4 PUCCH resources are needed when transmitting the PUCCH format 1b through a single antenna port, 8 PUCCH resources are needed when transmitting the PUCCH format 1b by applying the SORTD.

Table 2 shows a mapping relation between the ACK/NACK bit and the PUCCH resources when a 2-bit ACK/NACK signal is transmitted through the PUCCH where the SORTD has been applied. At this time, the number of orthogonal resources used is 4.

**[Table 2]**

| HARQ-ACK(0) | HARQ-ACK(1) | n_{PUCCH,i}^{(1,p=p0)} | b(0)b(1) for p=p0 | n_{PUCCH,i}^{(1,p=p1)} | b(0)b(1) for p=p1 |
|---|---|---|---|---|---|
| ACK | ACK | n_{PUCCH,1}⁽¹⁾ | 1,1 | n_{PUCCH,3}⁽¹⁾ | 1,1 |
| ACK | NACK/DTX | n_{PUCCH,0}⁽¹⁾ | 1,1 | n_{PUCCH,2}⁽¹⁾ | 1,1 |
| NACK/DTX | ACK | N_{PUCCH,1}⁽¹⁾ | 0,0 | n_{PUCCH,3}⁽¹⁾ | 0,0 |
| NACK | NACK/DTX | n_{PUCCH,0}⁽¹⁾ | 0,0 | n_{PUCCH,2}⁽¹⁾ | 0,0 |
| DTX | NACK/DTX | No Transmission | | | |

Table 3 shows a mapping relation between the ACK/NACK bit and the PUCCH resource when a 3-bit ACK/NACK signal is transmitted to the PUCCH where the SORTD has been applied. At this time, the number of orthogonal resources used is 6.

**[Table 3]**

| HARQ-ACK(0) | HARQ-ACK(1) | HARQ-ACK(2) | n_{PUCCH,i}^{(1,p=p0)} | b(0)b(1) for p=p0 | n_{PUCCH,i}^{(1,p=p1)} | b(0)b(1) for p=p 1 |
|---|---|---|---|---|---|---|
| ACK | ACK | ACK | n_{PUCCH,1}⁽¹⁾ | 1,1 | n_{PUCCH,4}⁽¹⁾ | 1,1 |
| ACK | NACK/DTX | ACK | n_{PUCCH,1}⁽¹⁾ | 1,0 | n_{PUCCH,4}⁽¹⁾ | 1,0 |
| NACK/DTX | ACK | ACK | n_{PUCCH,1}⁽¹⁾ | 0,1 | n_{PUCCH,4}⁽¹⁾ | 0,1 |
| NACK/DTX | NACK/DTX | ACK | n_{PUCCH,2}⁽¹⁾ | 1,1 | n_{PUCCH,5}⁽¹⁾ | 1,1 |
| ACK | ACK | NACK/DTX | n_{PUCCH,0}⁽¹⁾ | 1,1 | n_{PUCCH,3}⁽¹⁾ | 1,1 |
| ACK | NACK/DTX | NACK/DTX | n_{PUCCH,0}⁽¹⁾ | 1,0 | n_{PUCCH,3}⁽¹⁾ | 1,0 |
| NACK/DTX | ACK | NACK/DTX | n_{PUCCH,0}⁽¹⁾ | 0,1 | n_{PUCCH,3}⁽¹⁾ | 0,1 |
| NACK/DTX | NACK/DTX | NACK | n_{PUCCH,2}⁽¹⁾ | 0,0 | n_{PUCCH,5}⁽¹⁾ | 0,0 |
| NACK | NACK/DTX | DTX | n_{PUCCH,0}⁽¹⁾ | 0,0 | n_{PUCCH,3}⁽¹⁾ | 0,0 |
| NACK/DTX | NACK | DTX | n_{PUCCH,0}⁽¹⁾ | 0,0 | n_{PUCCH,3}⁽¹⁾ | 0,0 |
| DTX | DTX | DTX | No Transmission | | | |

Table 4 shows a mapping relation between the ACK/NACK bit and the PUCCH resource when a 3-bit ACK/NACK signal is transmitted through the PUCCH to which the SORTD has been applied. At this time, the number of orthogonal resources used is 8.

**[Table 4]**

| HARQ-ACK(0) | HARQ-ACK(1) | HARQ-ACK(2) | HARQ-ACK(3) | n_{PUCCH,i}^{(1,p=p0)} | b(0)b(1) for p=p0 | n_{PUCCH,i}^{(1,p=p1)} | b(0)b(1) for p=p 1 |
|---|---|---|---|---|---|---|---|
| ACK | ACK | ACK | ACK | n_{PUCCH,1}⁽¹⁾ | 1,1 | n_{PUCCH,5}⁽¹⁾ | 1,1 |
| ACK | NACK/ DTX | ACK | ACK | n_{PUCCH,2}⁽¹⁾ | 0,1 | n_{PUCCH,6}⁽¹⁾ | 0,1 |
| NACK/ DTX | ACK | ACK | ACK | n_{PUCCH,1}⁽¹⁾ | 0,1 | n_{PUCCH,5}⁽¹⁾ | 0,1 |
| NACK/ DTX | NACK/ DTX | ACK | ACK | n_{PUCCH,3}⁽¹⁾ | 1,1 | n_{PUCCH,7}⁽¹⁾ | 1,1 |
| ACK | ACK | ACK | NACK/ DTX | n_{PUCCH,1}⁽¹⁾ | 1,0 | n_{PUCCH,5}⁽¹⁾ | 1,0 |
| ACK | NACK/ DTX | ACK | NACK/ DTX | n_{PUCCH,2}⁽¹⁾ | 0,0 | n_{PUCCH,6}⁽¹⁾ | 0,0 |
| NACK/ DTX | ACK | ACK | NACK/ DTX | n_{PUCCH,1}⁽¹⁾ | 0,0 | n_{PUCCH,5}⁽¹⁾ | 0,0 |
| NACK/ DTX | NACK/ DTX | ACK | NACK/ DTX | n_{PUCCH,3}⁽¹⁾ | 1,0 | n_{PUCCH,7}⁽¹⁾ | 1,0 |
| ACK | ACK | NACK/ DTX | ACK | n_{PUCCH,2}⁽¹⁾ | 1,1 | n_{PUCCH,6}⁽¹⁾ | 1,1 |
| ACK | NACK/ DTX | NACK/ DTX | ACK | n_{PUCCH,2}⁽¹⁾ | 1,0 | n_{PUCCH,6}⁽¹⁾ | 1,0 |
| NACK/ DTX | ACK | NACK/ DTX | ACK | n_{PUCCH,3}⁽¹⁾ | 0,1 | n_{PUCCH,7}⁽¹⁾ | 0,1 |
| NACK/ DTX | NACK/ DTX | NACK/ DTX | ACK | n_{PUCCH,3}⁽¹⁾ | 0,0 | n_{PUCCH,7}⁽¹⁾ | 0,0 |
| ACK | ACK | NACK/ DTX | NACK/ DTX | n_{PUCCH,0}⁽¹⁾ | 1,1 | n_{PUCCH,4}⁽¹⁾ | 1,1 |
| ACK | NACK/ DTX | NACK/ DTX | NACK/ DTX | n_{PUCCH,0}⁽¹⁾ | 1,0 | n_{PUCCH,4}⁽¹⁾ | 1,0 |
| NACK/ DTX | ACK | NACK/ DTX | NACK/ DTX | n_{PUCCH,0}⁽¹⁾ | 0,1 | n_{PUCCH,4}⁽¹⁾ | 0,1 |
| NACK/ DTX | NACK | NACK/ DTX | NACK/ DTX | n_{PUCCH,0}⁽¹⁾ | 0,0 | n_{PUCCH,4}⁽¹⁾ | 0,0 |
| NACK | NACK/ DTX | NACK/ DTX | NACK/ DTX | n_{PUCCH,0}⁽¹⁾ | 0,0 | n_{PUCCH,4}⁽¹⁾ | 0,0 |
| DTX | DTX | NACK/ DTX | NACK/ DTX | No Transmission | | | |

Likewise, when the PUCCH is transmitted by applying the SORTD, the number of required PUCCH resources is twice the number of PUCCH resources needed in a single antenna port. It was explained above that the SORTD is applied to the PUCCH format 1b with channel selection for the convenience of explanation, but the number of required PUCCH resources also increases in the PUCCH format 3 in the same manner.

Hereinafter, a method of applying the transmit diversity scheme for the PUCCH without an increase of the PUCCH resources according to the present invention is described. In detail, the present invention provides a method of selecting an antenna port in order to support the transmit diversity for the PUCCH. Further, the present invention provides a method of selecting a precoding in order to support the transmit diversity for the PUCCH. In the description below, it is assumed that the number of antenna ports is 1 or 2 for the convenience of explanation, but the present invention is not limited thereto. Further, in the description below, the precoding refers to all methods which may give different weights to different antenna ports from each other, but a specific precoding method is not limited by the present invention. For example, the precoding selection refers to selecting a precoding parameter such as a precoding matrix. Furthermore, the precoding selection may include antenna port selection. For example, when there are two antenna ports, the fact that the precoding matrix is [+1, 0] may be the same as the transmission using only the first antenna port (antenna port 0), and the fact that the precoding matrix is [0, +1] may be the same as the transmission using only the second antenna port (antenna port 1). Furthermore, the present invention may be applied regardless of the type of the PUCCH format, and may be applied to both the FDD and TDD systems.

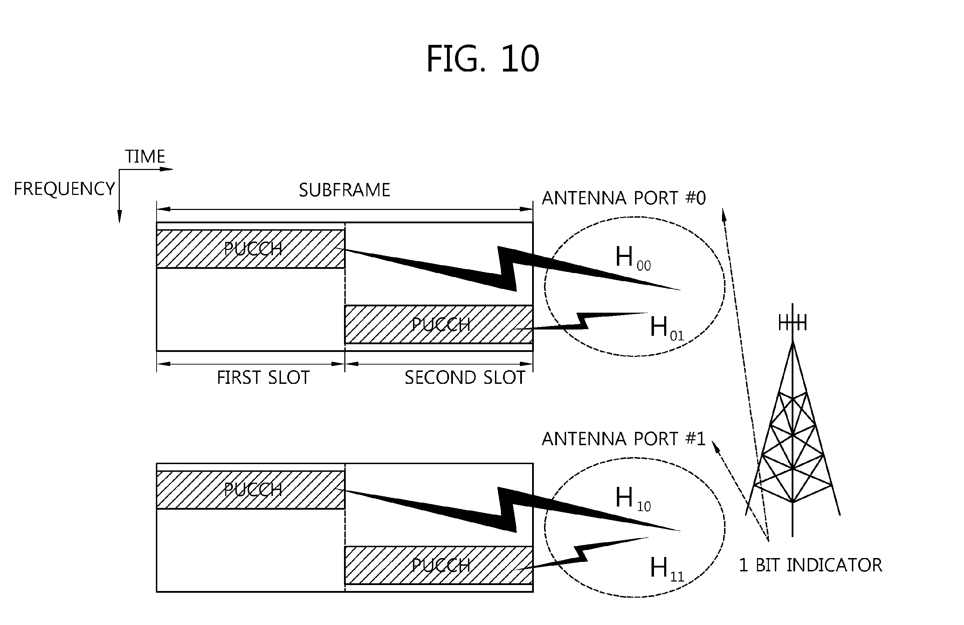

FIG. 10 shows an embodiment of an antenna port selection scheme according to the present invention.

FIG. 10 shows an embodiment of a method for selecting an antenna port in subframe units. As described in FIG. 5, the PUCCH is allocated by being frequency-hopped in each slot within the subframe. That is, locations in the frequency domain, where the PUCCH is allocated to two slots within the subframe, are different. Hence, the frequency diversity may be obtained. The UE may transmit an uplink control signal on antenna port 0 or antenna port 1 through the PUCCH. When the UE transmits the uplink control signal on both the antenna port 0 and the antenna port 1 in one subframe or in two or more subframes, the base station may determine from which antenna port a better signal has been received among antenna port 0 and antenna port 1 for a specific UE. Hence, the base station may select an antenna port which has sent a better receiving signal and let the UE know the selection. The antenna selection method of the base station is not limited in the present invention. The antenna port for the PUCCH may be selected based on different uplink signals such as PUSCH or SRS other than the PUCCH.

The base station may let the UE know the selected antenna port through 1 bit indicator. The 1-bit indicator may be transmitted to the UE through PHY (physical), media access control (MAC), or radio resource control (RRC) signaling. When the value of the indicator is 0, the PUCCH transmission through antenna port 0 may be indicated, and when the value of the indicator is 1, the PUCCH transmission through antenna port 1 may be indicated. On the other hand, when the value of the indicator is 0, the PUCCH transmission through antenna port 1 may be indicated, and when the value of the indicator is 1, the PUCCH transmission through antenna port 0 may be indicated. The UE may perform the PUCCH transmission based on the antenna port selected by the base station.

Referring to FIG. 10, the channel in the first slot of antenna port 0 may be indicated as H₀₀. The channel in the second slot of antenna port 0 may be indicated as H₀₁. The channel in the first slot of antenna port 1 may be indicated as H₁₀. The channel in the second slot of antenna port 1 may be indicated as H₁₁. The base station may select an antenna port with a better receiving signal and let the UE know the selection. As such, the antenna port for one PUCCH transmission may be selected.

When the base station selects one antenna port, the antenna port may be selected based on the average value of the channel in two slots. This is because the frequency hopping is applied between two slots within the subframe, and thus the influence of the fading in each slot may be different. That is, channel H₀₀ in the first slot of antenna port 0 and channel H₀₁ in the second slot of antenna port 0 may be different. In particular, in the channel with a high frequency selectivity, the difference between the channel in the first slot and the channel in the second slot may be greater. Likewise, channel H₁₀ in the first slot of antenna port 1 and channel H₁₁ in the second slot of antenna port 1 may be different. When the antenna port is selected based on the average value of the channel in two slots, a larger diversity gain may be obtained than that at the PUCCH transmission through a single antenna port, but it is difficult to maximize the diversity gain.

Further, when the precoding selection scheme is applied to support the transmit diversity for the PUCCH, the channels (H₀₀, H₀₁, H₁₀, H₁₁) in FIG. 10 may be substituted with the precoding matrix value. That is, the precoding matrix in the first slot of antenna port 0 in FIG. 10 may be indicated as H₀₀ (e.g., [+1, +1]). The precoding matrix in the second slot of antenna port 0 may be indicated as H₀₁ (e.g., [+1, -1]). At this time, H₀₀ and H₀₁ may be used in the same manner. Furthermore, the precoding matrix in the first lot of antenna port 1 may be indicated as H₁₀ (e.g., [+1, +1]). The precoding matrix in the second slot of antenna port 1 may be indicated as H₁₁ (e.g., [+1, -1]). At this time, H₁₀ and H₁₁ may be used in the same manner. Hence, the precoding for one PUCCH transmission may be selected.

When the base station selects one precoding, the antenna port may be selected based on the average value of the precoding matrix in two slots as in the antenna selection scheme. This is because the frequency hopping is applied between two slots within the subframe and thus the influence of fading in each slot may be different. When the precoding is selected based on the average value of the precoding matrix in two slots, a larger diversity gain may be obtained than that at the PUCCH transmission through a single antenna port, but it is difficult to maximize the diversity gain.

The antenna port selection or precoding selection of the base station may be differently set for each PUCCH format. For example, when the antenna selection scheme is applied to PUCCH format 1b with channel selection and PUCCH format 3, different antenna port selections may be configured for the PUCCH format 1b with channel selection and the PUCCH format 3 so as to be signaled.

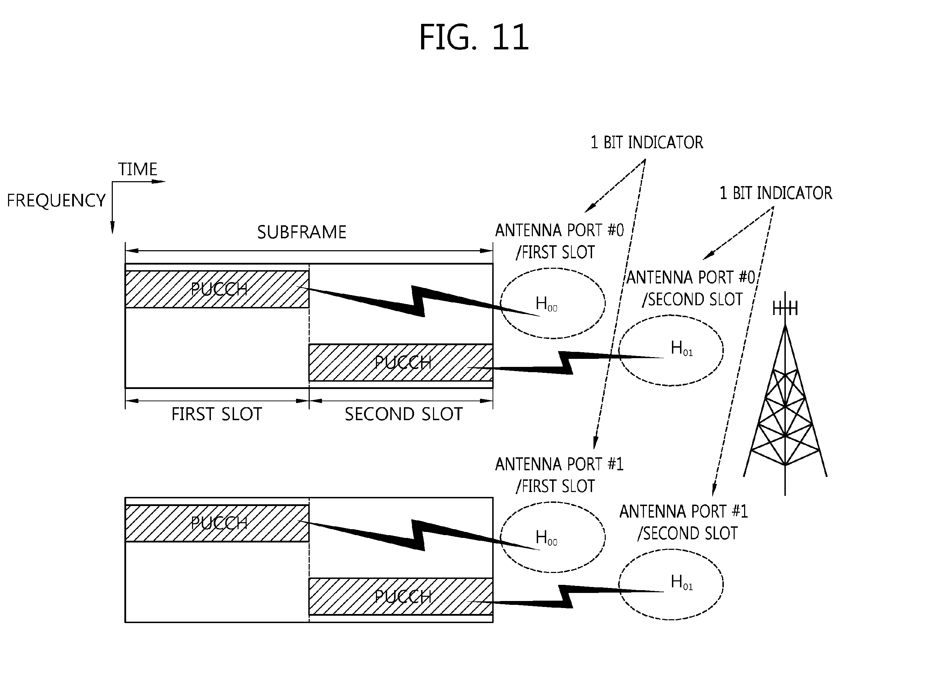

FIG. 11 shows another embodiment of an antenna port selection scheme according to the present invention.

FIG. 11 shows an embodiment of a method for selecting an antenna port in slot units. The PUCCH is allocated by being frequency-hopped in each slot within the subframe. The UE may transmit an uplink control signal through PUCCH on antenna port 0 or antenna port 1. When the UE transmits an uplink control signal on both antenna port 0 and antenna port 1 in one subframe or in two or more slots, the base station may determine from which antenna port a better signal has been received among antenna port 0 and antenna port 1 at each slot for a specific UE. Hence, the base station may select an antenna port with a better receiving signal for each slot and let the UE know the selection. The present invention is not limited to the antenna selection method of the base station. The antenna port for PUCCH may be selected based on different uplink signals such as PUSCH and SRS other than PUCCH.

The base station may let the UE know the selected antenna port through the 2-bit indicator (or 2 1-bit indicators). The 2-bit indicator (or 2 1-bit indicators) may be transmitted to the UE through PHY, MAC, or RRC signaling. For example, the 2-bit indicator (or 2 1-bit indicators) may be configured as follows.

- 00: PUCCH transmission instruction through antenna port 0 in the first slot and through antenna port 0 in the second slot

- 01: PUCCH transmission instruction through antenna port 0 in the first slot and through antenna port 1 in the second slot

- 10: PUCCH transmission instruction through antenna port 1 in the first slot and through antenna port 0 in the second slot

- 11: PUCCH transmission instruction through antenna port 1 in the first slot and through antenna port 1 in the second slot

Furthermore, the 2-bit indicator (or 2 1-bit indicators) may be configured as follows.

- 00: PUCCH transmission instruction through antenna port 1 in the first slot and through antenna port 1 in the second slot

- 01: PUCCH transmission instruction through antenna port 1 in the first slot and through antenna port 0 in the second slot

- 10: PUCCH transmission instruction through antenna port 0 in the first slot and through antenna port 1 in the second slot

- 11: PUCCH transmission instruction through antenna port 0 in the first slot and through antenna port 0 in the second slot

The above configuration of the 2-bit indicator is merely an example, and various mapping methods may be used.

Referring to FIG. 11, the channel in the first slot of antenna port 0 may be indicated as H₀₀. The channel in the second slot of antenna port 0 may be indicated as H₀₁. The channel in the first slot of antenna port 1 may be indicated as H₁₀. The channel in the second slot of antenna port 1 may be indicated as H₁₁. The base station may select an antenna port with a better received signal for each slot and let the UE know the selection. As such, an antenna port for each slot may be selected in the PUCCH transmission. The antenna port is selected in consideration of the channel at each slot which may have different fading influences, and thus the diversity gain may be maximized.

Furthermore, when the precoding selection scheme is applied to support the transmit diversity for PUCCH, the channel (H₀₀, H₀₁, H₁₀, H₁₁) in FIG. 11 may be substituted as the precoding matrix value. The frequency hopping is applied between two slots within the subframe, and thus the fading influences in each slot may be different. That is, the precoding matrix H₀₀ may be best in the first slot of antenna port 0, but the precoding matrix H₀₁ may be best in the second slot of antenna port 0. In particular, in the channel with a high frequency selectivity, the difference between the channel in the first slot and the channel in the second slot may be greater. Likewise, the precoding matrix H₁₀ may be best in the first slot of antenna port 1, but the precoding matrix H₁₁ may be best in the second slot of antenna port 1. As such, the precoding for each slot may be selected in the PUCCH transmission.

The base station may let the UE know the selected precoding through a 2 or greater bit indicator. For example, when the number of supportable precoding matrixes is a, the selected precoding may be notified to the UE through the a-bit indicator.

The antenna port selection or precoding selection of the base station may be differently set for each PUCCH format. For example, when the antenna selection scheme is applied to PUCCH format 1b with channel selection and PUCCH format 3, different antenna port selections may be configured for the PUCCH format 1b with channel selection and the PUCCH format 3 so as to be signaled.

The PUCCH format 3 is transmitted through one PUCCH resource, and thus as described above, the base station selects an antenna port for each slot and let the UE know the selection through the 2-bit indicator. In the case of the precoding selection, a-bit (larger than 2-bit) indicator may be used. The PUCCH format 1b with channel selection is transmitted through one PUCCH resource which is selected among 2 to 4 PUCCH resources. In such a case, the antenna port, which is selected by the base station for each slot, may be determined regardless of the PUCCH resource. That is, the antenna port may be selected based on the average value for a plurality of PUCCH resources which are usable at each slot. Hence, the diversity gain cannot be maximized, but the signaling overhead may be reduced compared to the method of selecting the antenna port for each PUCCH resource. The base station may select the antenna port for each slot regardless of the plurality of PUCCH resources, and let the UE know the selection through the 2-bit indicator. The UE may transmit an uplink control signal through the selected PUCCH resource on the selected antenna port. In the case of the precoding selection, an a-bit (larger than 2-bit) indicator may be used.

Hereinafter, a method of selecting an antenna port or precoding for each PUCCH resource is described.

When an antenna port is selected regardless of a plurality of PUCCH resources, the antenna port may be selected based on the average value throughout the plurality of PUCCH resources. However, when the antenna port is selected based on the average value throughout the plurality of PUCCH resources, the diversity gain may be greater than that at the PUCCH transmission through a single antenna port, but it is difficult to maximize the diversity gain. Hence, the present invention provides a method of selecting an antenna port for each PUCCH resource in order to support the transmit diversity for the PUCCH. Furthermore, the present invention provides a method of selecting precoding for each PUCCH resource in order to support the transmit diversity for the PUCCH.

To this end, indicators for indicating the antenna ports selected for each PUCCH resource may be defined. For example, it is assumed that one antenna port is selected for each subframe and a 1-bit indicator is transmitted to indicate the selection. In PUCCH format 1b with channel selection which uses one PUCCH resource among two PUCCH resources, a total of 2-bit indicator may be configured (1-bit for each PUCCH resource). In PUCCH format 1b with channel selection which uses one PUCCH resource among three PUCCH resources, a total of 3-bit indicator may be configured (1-bit for each PUCCH resource). In PUCCH format 1b with channel selection which uses one PUCCH resource among four PUCCH resources, a total of 4-bit indicator may be configured (1-bit for each PUCCH resource). Furthermore, a different mapping may be used. Furthermore, one precoding is selected for each PUCCH resource, and a-bit (larger than 1-bit) indicator may be configured to indicate the selection.

For example, a case where an antenna port is selected by configuring total of 3-bit indicator in the PUCCH format 1b with channel selection which uses one of three PUCCH resources is described. When the value of the 1-bit indicator for PUCCH resource 0 (n_{PUCCH,0}⁽¹⁾) is 0, the PUCCH transmission through antenna port 0 may be indicated, and when the value of the 1-bit indicator is 1, the PUCCH transmission through antenna port 1 may be indicated. When the value of the 1-bit indicator for PUCCH resource 1 (n_{PUCCH,1}⁽¹⁾) is 0, the PUCCH transmission through antenna port 0 may be indicated, and when the value of the 1-bit indicator is 1, the PUCCH transmission through antenna port 1 may be indicated. When the value of the 1-bit indicator for PUCCH resource 2 (n_{PUCCH,2}⁽¹⁾) is 0, the PUCCH transmission through antenna port 0 may be indicated, and when the value of the 1-bit indicator is 1, the PUCCH transmission through antenna port 1 may be indicated. As such, a total of 3-bit indicator may be configured. The UE may transmit the PUCCH through the antenna port selected for each PUCCH. The above-described configuration of the indicator is merely an example, and the indicator may be configured in various methods.

Furthermore, it is assumed that one antenna port is selected for each subframe, and a 2-bit (or 2 1-bits) indicator is transmitted in order to indicate the selection. A total of 4-bit indicator (2-bits for each PUCCH resource) may be configured in PUCCH format 1b with channel selection which uses one of two PUCCH resources. A total of 6-bit indicators (2-bits for each PUCCH resource) may be configured in the PUCCH format 1b with channel selection which uses one of three PUCCH resources. A total of 8-bit indicator (2-bits for each PUCCH resource) may be configured in the PUCCH format 1b with channel selection which uses one of four PUCCH resources. Or, a different mapping may be used. Furthermore, one precoding may be selected for each PUCCH resource, and a-bit indicator (larger than 2-bits) may be configured to indicate the selection.

For example, a case where an antenna port is selected by configuring total of 6-bit indicator in the PUCCH format 1b with channel selection which uses one of three PUCCH resources is described. The 2-bit indicator for PUCCH resource 0 (n_{PUCCH,0}⁽¹⁾) maybe configured as follows.

- 00: PUCCH transmission instruction through antenna port 0 in the first slot and through antenna port 0 in the second slot

- 01: PUCCH transmission instruction through antenna port 0 in the first slot and through antenna port 1 in the second slot

- 10: PUCCH transmission instruction through antenna port 1 in the first slot and through antenna port 0 in the second slot

- 11: PUCCH transmission instruction through antenna port 1 in the first slot and through antenna port 1 in the second slot

The 2-bit indicator for PUCCH resource 1 (n_{PUCCH,1}⁽¹⁾) may be configured as follows.

- 00: PUCCH transmission instruction through antenna port 0 in the first slot and through antenna port 0 in the second slot

- 01: PUCCH transmission instruction through antenna port 0 in the first slot and through antenna port 1 in the second slot

- 10: PUCCH transmission instruction through antenna port 1 in the first slot and through antenna port 0 in the second slot

- 11: PUCCH transmission instruction through antenna port 1 in the first slot and through antenna port 1 in the second slot

The 2-bit indicator for PUCCH resource 2 (n_{PUCCH,2}⁽¹⁾) may be configured as follows.

- 00: PUCCH transmission instruction through antenna port 0 in the first slot and through antenna port 0 in the second slot

- 01: PUCCH transmission instruction through antenna port 0 in the first slot and through antenna port 1 in the second slot

- 10: PUCCH transmission instruction through antenna port 1 in the first slot and through antenna port 0 in the second slot

- 11: PUCCH transmission instruction through antenna port 1 in the first slot and through antenna port 1 in the second slot

As such, a total of 6-bit indicator may be configured. The UE may transmit the PUCCH through the antenna port which is selected for each slot for each PUCCH resource. The above-described configuration of the indicator is merely an example, and the indicator may be configured in various methods.

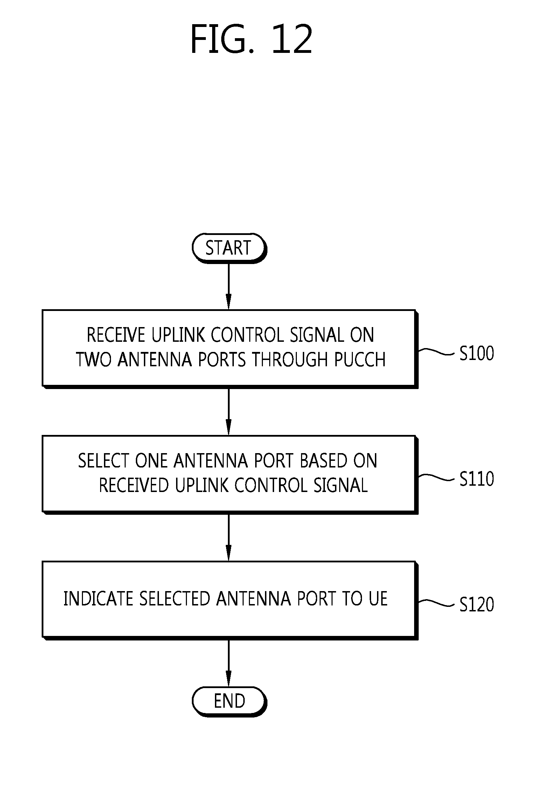

FIG. 12 shows an embodiment of a method for selecting an antenna port according to the present invention.

In step S100, the base station receives an uplink control signal on two antenna ports from the UE through PUCCH. In step S110, the base station selects one antenna port with a better channel state among the two antenna ports based on the received uplink control signal. In step S120, the base station transmits the indicator, which indicates the selected antenna port, to the UE. The indicator may be configured as described above.

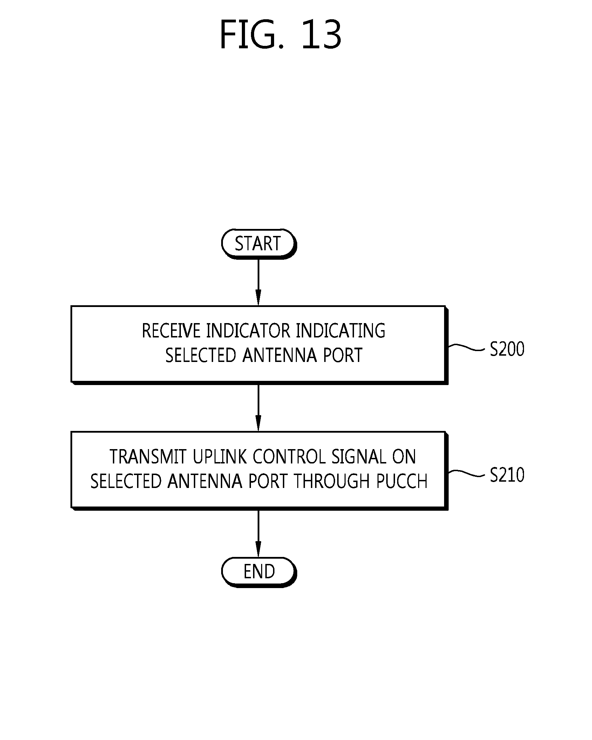

FIG. 13 shows an embodiment of a method for transmitting an uplink control signal according the present invention.

In step S200, the UE receives the indicator, which indicates one antenna port with a better channel state selected by the base station, from the base station. The indicator may be configured as described above. In step S210, the UE transmits the uplink control signal on the one selected antenna port through PUCCH.

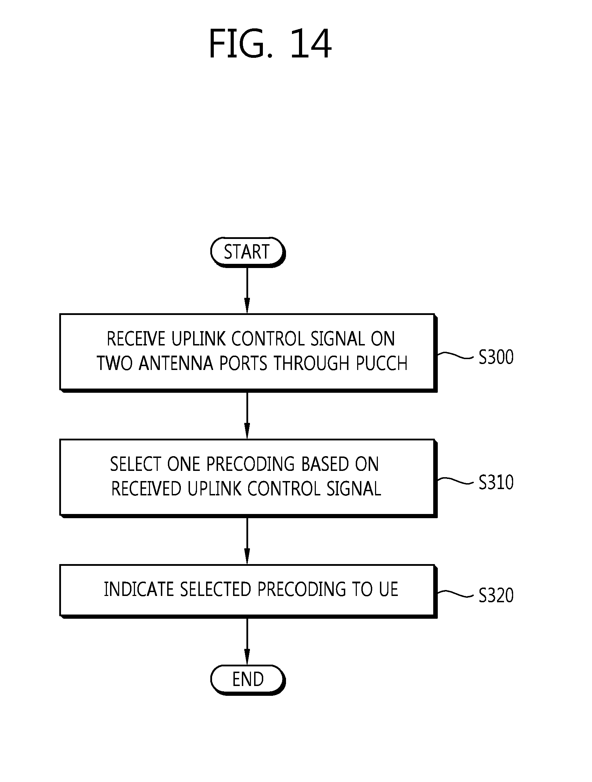

FIG. 14 shows an embodiment of a method for selecting precoding according to the present invention.

In step S300, the base station receives the uplink control signal from the UE through PUCCH. In step S310, the base station selects one precoding based on the received uplink control signal. In step S320, the base station transmits the indicator, which indicates the selected precoding, to the UE. The indicator may be configured as described above.

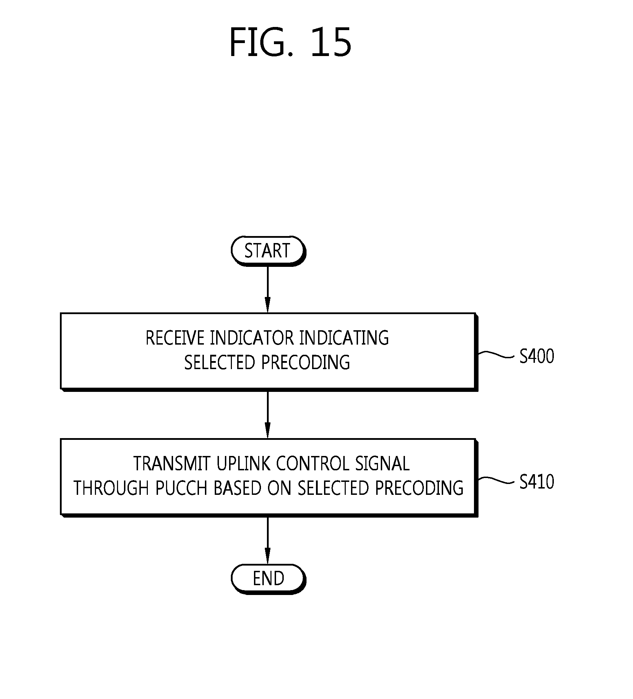

FIG. 15 shows another embodiment of a method for transmitting an uplink control signal according the present invention.

In step S400, the UE receives the indicator, which indicates one precoding selected by the base station, from the base station. The indicator may be configured as described above. In step S410, the UE transmits the uplink control signal through PUCCH based on the selected precoding.

In the above description, it was explained that the indicator, which indicates the selected antenna port or selected precoding, may be transmitted through one of PHY, MAC, and RRC, but the indicator may be preferably transmitted through PHY. This is because, a relatively large amount of time is required in changing the indicator when the indicator is configured in the RRC, but the channel state, which affects the selection of the antenna port or precoding, may change relatively fast. Hence, the indicator, which indicates the selected antenna port or selected precoding, may be preferably configured in the PHY in order to quickly respond to the change of the channel state.

Hereinafter, the method of transmitting the indicator, which indicates the selected antenna port or selected precoding, through PHY, is described. In detail, the method of transmitting the indicator, which indicates the selected antenna port or selected precoding, through the DCI format within the PDCCH associated with the PUCCH, will be described. Only the indicator, which indicates the selected antenna port, is described for the convenience of description.

It is assumed that the PUCCH carries the ACK/NACK signal for the downlink data. At this time, the PUCCH may carry any one of the ACK/NACK signal for the PDSCH where the corresponding PDCCH exists, the ACK/NACK signal for the PDSCH where the corresponding PDCCH does not exist (semi-persistent scheduling (SPS) PDSCH), or the ACK/NACK signal for the PDCCH which indicates downlink SPS relesae. That is, the PDCCH corresponding to the PUCCH exists except the ACK/NACK for the SPS PDSCH. The indicator, which indicates the selected antenna port, may be transmitted through such a PDCCH.

The base station may transmit the indicator which indicates the selected antenna port through the DCI format within the PDCCH allocated to the USS. This is to minimize the increase of the blind decoding. When the base station indicates the antenna port selection to the UE through RRC, etc., the UE performs blind decoding in consideration of the increased length of the DCI format by the indicator when decoding the PDCCH in the USS. When the base station indicates the fact that the antenna port selection scheme is not used, to the UE through RRC, etc., the UE performs blind decoding based on the conventional length of the DCI format when decoding the PDCCH in the USS. As such, even if a new indicator is added within the DCI format, the number of times of blind decoding performed by the UE may not increase.

The selection of the antenna port may be supported by only the PDCCH allocated to the USS. That is, it may be assumed that in the UE, all PDCCHs are allocated only to the USS. It may be assumed that in the UE, the indicator, which indicates the selected antenna port, may be transmitted only through the PDCCH allocated to the USS. Furthermore, the selection of the antenna port may be supported by the PDCCH allocated to the USS and/or CSS. The UE may receive the indicator which indicates the selected antenna port through the PDCCH allocated to the USS. The PDCCH allocated to the CSS does not include the indicator. The UE may perform PUCCH transmission based on the indicator which is received through the PDCCH allocated to the USS. Furthermore, the selection of the antenna port may be supported by only the PDCCH allocated to the CSS. That is, all PDCCHs associated with the antenna port selection may be transmitted to the CSS. At this time, the UE may reuse the indicator which indicates the previously selected antenna port. Hence, the base station does not need to transmit a separate indicator if the selected antenna port is not changed.

When there are one or more DL cells and/or one or more DL subframes which transmit the ACK/NACK signal through one PUCCH, the indicator, which is transmitted through one or more DL cells and/or one or more DL subframes, may have the same value. That is, the indicators within the DCI format of all PDCCHs allocated to the one or more DL cells and/or one or more DL subframes may have the same value. If the indicators within a plurality of DCI formats have different values, all PDCCHs may be discarded assuming that the UE has incorrectly received PDCCH.

The associated PDCCH does not exist in the ACK/NACK signal for the SPS PDSCH, and thus the UE cannot receive the indicator which indicates the selected antenna port. Hence, the UE may perform the PUCCH transmission according to a predetermined rule.

1) When the PUCCH format used in the actual PUCCH transmission is different from the PUCCH format configured by the RRC, the PUCCH transmission may be performed according to the transmit diversity scheme and resource allocation method applied to the PUCCH format which is actually used in transmission.

2) The PUCCH transmission may be performed without application of the transmit diversity scheme. That is, the PUCCH transmission may be performed without precoding or through a single antenna port.

3) When the SPS is activated, the indicator, which indicates the selected antenna port, may be received through the DCI format within the PDCCH which indicates the activation. The UE may perform PUCCH transmission on the selected antenna port.

4) The PUCCH transmission may be performed on the selected antenna port according to the antenna port selection method defined by the RRC.

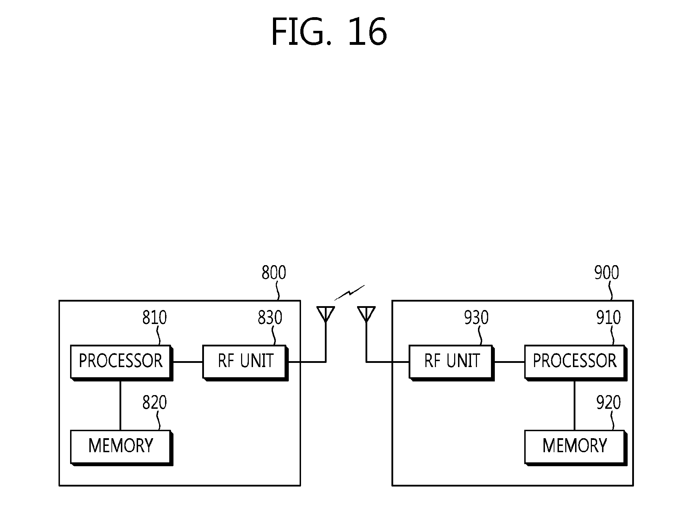

FIG. 16 is a block diagram showing wireless communication system to implement an embodiment of the present invention.

Abase station 800 includes a processor 810, a memory 820, and an RF (radio frequency) unit 830. The processor 810 may be configured to implement proposed functions, procedures, and/or methods in this description. Layers of the radio interface protocol may be implemented in the processor 810. The memory 820 is operatively coupled with the processor 810 and stores a variety of information to operate the processor 810. The RF unit 830 is operatively coupled with the processor 810, and transmits and/or receives a radio signal.

Auser equipment 900 may include a processor 910, a memory 920 and a RF unit 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The RF unit 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The RF units 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope and spirit of the present disclosure.

## Claims

1. A method of transmitting, by a user equipment (UE), an uplink control signal in a wireless communication, the method comprising:
receiving an indicator indicating one antenna port which is selected by a base station and has a good channel state, from the base station; and
transmitting the uplink control signal on the selected one antenna port through a physical uplink control channel (PUCCH).

2. The method of claim 1, wherein the one antenna port is selected for each subframe, for each slot, or for each PUCCH resource.

3. The method of claim 2, wherein the one antenna port is selected based on an average value of a channel in two slots within a subframe.

4. The method of claim 2, wherein the indicator is 1 bit or 2 bits.

5. The method of claim 1, wherein the indicator is received through a physical downlink control channel (PDCCH) by being included in downlink control information (DCI) associated with the PUCCH.

6. The method of claim 5, wherein the DCI is received through a PDCCH allocated to a user-equipment search space (USS).

7. The method of claim 5, wherein the selection of the one antenna port by the base station is supported by a received PDCCH allocated to a common search space (CSS), and
wherein the indicator, which is received through the PDCCH by being included in the DCI associated with the PUCCH, is reused.

8. A method of selecting, by a base station, an antenna port in a wireless communication system, the method comprising:
receiving, from a user equipment (UE), an uplink control signal on two antenna ports through a physical uplink control channel (PUCCH);
selecting one antenna port with a better channel state among the two antenna ports based on the received uplink control signal; and
transmitting an indicator indicating the selected antenna port to the UE.

9. The method of claim 8, wherein the one antenna port is selected for each subframe or for each slot.

10. A method of transmitting, by a user equipment (UE), an uplink control signal in a wireless communication system, the method comprising:
receiving an indicator indicating one precoding which is selected by a base station, from the base station; and
transmitting the uplink control signal on the selected precoding through a physical uplink control channel (PUCCH).

11. The method of claim 10, wherein the precoding is a precoding matrix.

12. The method of claim 10, wherein the one precoding is selected for each subframe, for each slot, or for each PUCCH resource.

13. The method of claim 12, wherein the one precoding is selected based on an average value of a channel in two slots within a subframe.

14. The method of claim 12, wherein the indicator is 1 bit or 2 bits.

15. The method of claim 10, wherein the indicator is received through a physical downlink control channel (PDCCH) by being included in downlink control information (DCI) associated with the PUCCH.

16. The method of claim 15, wherein the DCI is received through a PDCCH allocated to a user-equipment search space (USS).

17. The method of claim 15, wherein the selection of the one precoding by the base station is supported by a received PDCCH allocated to a common search space (CSS), and
wherein the indicator, which is received through the PDCCH by being included in the DCI associated with the PUCCH, is reused.
